# EUROPEAN PATENT SPECIFICATION

(11) **EP 1 664 172 B1**
(45) Date of publication and mention of the grant of the patent: **10.01.2007**
(21) Application number: 04766734.0
(22) Date of filing: 08.09.2004
(51) Int. Cl.: C08K 3/30, C08K 9/02, B41M 5/26

(54) **LASER MARKABLE POLYMERIC COMPOSITIONS**
LASERMARKIERBARE POLYMERZUSAMMENSETZUNGEN
COMPOSITIONS POLYMERIQUES POUVANT ETRE MARQUEES AU LASER

(30) Priority: 17.09.2003 AU 2003905088
(43) Date of publication of application: 07.06.2006
(73) Proprietor: Ciba Specialty Chemicals Holding Inc., 4057 Basel (CH)
(72) Inventor: LANGDON, Donald Robert, Pheasant Creek, Victoria 3757 (AU); DORDEVIC, Michael, Epping, Victoria 3076 (AU)
(86) International application number: PCT/EP2004/052079
(87) International publication number: WO 2005/026247

(56) References cited:
- EP-A- 0 413 664

## Description

The present invention relates to improved polymeric compositions having laser-marking properties.

The marking of, and printing onto, polymeric materials in an indelible fashion is required in many different applications. Domestic articles, engine parts for automobiles, key tops for computer keyboards and other similar products are often marked with letters, symbols or other markings. Such markings can be applied by using a curable ink. However, there are usually high production costs involved in using curable inks as there are a number of separate steps required for the application and curing of such inks.

An alternative is laser marking. In laser marking a laser is used in conjunction with a polymeric material which has incorporated therein a suitable laser marking compound. The wavelength of the laser beam is tuned according to the compound to cause the polymeric material to burn resulting in a clear contrast between the irradiated area and the rest of the product.

An example is EP-A-0 867 466 which teaches a polyolefin resin composition comprising 100 parts by weight of a polyolefin resin and 0.01 to 20 parts by weight of a black pigment mainly comprising a metal oxide. When a laser beam is applied to the resin, the black pigment decomposes in the irradiated areas and is completely released. As a result, lighter coloured markings are obtained in contrast to the unmarked area of the moulded article, which is black.

However, in many circumstances it is desirable to mark a polymeric product which is brightly coloured. The polyester resin composition of EP-A-0 867 466 is capable of only providing white barcode markings against a black background and therefore is not useful if the background area is a lighter colour.

JP-A-2001/071 645 describes a resin composition comprising a thermoplastic resin, a sulphide and pigments including coloured pigments and a black stain pigment - in particular carbon black having a mean particle size of 10 to 90 nm. When a laser beam of wavelength from 354 nm to 1064 nm is applied to the resin, the carbon black absorbs the laser beam, converts it into heat energy and a marking with a "very high degree of black" is obtained. This prior patent specification describes the use of laser marking to produce a black barcode. This barcode is said to contrast with the non-irradiated area of the moulded article. However, it has been found that the composition described in JP-A-2001/071645 does not work well where the background is a bright colour such as pink or yellow. EP-A-0413 664 discloses molybdenum sulphide as an additive in articles which display a visual effect upon laser marking

One particular area where coloured resins are used is for the production of livestock items such as ear tags. Ear tags are traditionally used by farmers as a means of tracking and readily identifying stock. Tags are typically made of thermoplastic resins and are marked with letters, digits, patterns, barcodes, pointcodes or symbols, including also purely decorative designs and trademarks. It is often desirable to use tags or sets of tags of bright, optionally different, colours (and if desired different forms). In the context of, for example, handling livestock, the use of colours such as yellow or pink enables handlers to readily segregate and group livestock. There is a need in this application, and of course many other applications, where the laser marking of brightly coloured polymeric compositions is desirable. Accordingly, it is an object of the present invention to provide an improved polymeric composition which enables a laser marking process to be used to produce dark marking particularly where the polymeric composition is brightly coloured.

In one aspect of the present invention there is provided a composition having laser-marking properties, said composition comprising a polymeric material, mica or a micaceous material and a metal sulphide.

Surprisingly it has been found that when a laser beam is applied to the surface of an article formed from such a polymeric composition prominent, clearly defined and sharp dark marking is achieved in the irradiated areas even when the polymeric resin is brightly coloured. More particularly, it is possible when using the compositions of the present invention to produce fine and well resolved dark marking so that detailed graphics such as bar-codes can be marked onto polymeric products whether these products are white or some other colour. Whilst mica and micaceous materials have been used in the past for laser marking of polymeric materials, the applicants have surprisingly found that the addition of a metal sulphide will significantly improve the quality of the marking. The use of a metal sulphide alone does not give rise to dark marking when irradiated by laser and the synergistic effect was unexpected.

In a second aspect of the present invention there is provided an article; said article being formed from a composition which comprises a polymeric material, mica or a micaceous material, and a metal sulphide; wherein the article so formed is adapted to exhibit dark markings in areas irradiated with a laser beam.

In a third aspect of the present invention there is provided a method of producing an article having laser marked surface portions, said method comprising:
(a) providing a polymeric material;
(b) compounding said polymeric material with mica or a micaceous material and a metal sulphide and one or more non-black organic pigments to provide a polymeric composition;
(c) forming an article using the polymeric composition; and
(d) irradiating said article with a laser beam to produce laser marked surface portions on the article.

As used herein, the term "marking" refers to any laser mark whatsoever and is not limited to letters. It includes the application of patterns, barcodes, symbols or drawings and the like.

The polymeric material used in the present invention is not particularly limited and may be selected from a wide range of resins including polyolefins, polyurethanes, polycarbonates, polyesters, rubber modified monovinylidene, aromatic resins, polyetherimides, polyamides, polyimides, polyester carbonates, polyphenylene sulphides, polyamideimides, polyesteramides, polyether esters, polyetherimide esters, polyarylates, polymethylpentenes, polysulfones, polyethersulfones, polystyrenes, rubber modified high impact polystyrenes, polyoxymethylenes, styrene maleic anhydride copolymers, acrylonitrile styrene acrylate copolymers, acrylonitrile butadiene styrene copolymers (ABS), polyphenylene ethers, polyether ketones, chlorinated polymers, fluorinated polymers, and liquid crystal polymers. In a more preferred aspect the polymeric material is selected from the group consisting of polyurethanes, polyamides, ABS, polycarbonates and rubber modified monovinylidene aromatic resins and blends thereof. Most preferred is a thermoplastic polyurethane resin.

The mica or micaceous material used in the present invention may be any such material which when combined with a polymeric resin and irradiated with a laser beam will cause dark marking. Natural or synthetic micas can be utilized. Preferably the mica or micaceous material is treated or doped with one or more metal compounds. The metal compounds may be present as one or more thin, coloured or colorless layers on the surface of the mica or micaceous material, or in discontinuous areas, too. Each such layer or array of discontinuous areas may be light-interfering or non-light-interfering. Preferably the metal compounds comprise, preferably consist of one or more metal oxides, e.g. such as oxides of antimony and/or titanium and/or tin, or oxides of iron and/or aluminium and/or silicium. Alternatively mica or micaceous materials coated or treated with bismuth oxychloride may be utilized. The mica or micaceous material preferably has a density of between 2.8 to 4.0 g/cm³. Preferably it has a Mohs hardness of 2.5 to 4 and oil absorption values of 35 to 70.0 grams per 100 grams of powder. Preferably the amount of mica ranges from 0.05 to 2 percent by weight based on the total weight of the composition. More preferably, the amount of mica present is from about 0.1 to about 0.5 percent by weight, based on the total weight of the composition.

The metal sulphide can be the sulphide of any metal with any known stoichiometry, such as MeS, MeS₂, Me₂S₃ or Me₃S₄, wherein Me is a metal of group 1-14 of the periodic system, especially a transition metal of group 9-12 of the periodic system, for example cadmium(II) sulphide, cobalt(II) sulphide, cobalt(II,III) sulphide (linneit), cobalt(III) sulphide, cobalt(IV) sulphide (cattierite), copper(I) sulphide (chalkosite), copper(II) sulphide (covellin), iron(II) sulphide, iron(III) sulphide, iron(IV) sulphide (pyrite, markasite), nickel(II) sulphide (millerite) or zinc(II) sulphide. Mixed sulphides of two or more metals are also suitable. The metal sulphide may contain other components, such as impurities or crystal water.

The metal sulphide is desirably selected from the group consisting of cadmium sulphide, iron sulphide, zinc sulphide and mixed sulphides comprising cadmium, iron or zinc as one of the metals. Amongst iron sulphides, types with yellowish or gold appearance are especially suitable. Most preferably the metal sulphide is zinc sulphide, such as albalith, cleiophane, maltraite, sachtolith, sphalerite or wurtzite. When the composition of the invention is brightly coloured it is preferred to use a metal sulphide which is white (such as zinc sulphide) or a metal sulphide which is a similar colour to the composition e.g. cadmium sulphide when the composition is yellow-red so that the addition of the metal sulphide does not result in any significant discolouration of the composition.

The metal sulphide is preferably of fine particle size (such as below about 50 µm, in particular below about 20 µm), most preferred of pigmentary grade (such as below about 5 µm), such as for example C.I. Pigment Yellow 35, C.I. Pigment Yellow 37 or especially C.I. Pigment White 7.

The amount of the metal sulphide present in the polymeric composition is preferably sufficient to produce a dark marking on the moulded article when it has been irradiated with a laser beam at an irradiation level of 5 - 50 ampere at a frequency of 1 - 100 kHz in the range of 500-2100 nm. More preferably the amount of metal sulphide present in the polymeric composition ranges from 0.05 to 3 percent by weight, based on the total weight of the composition. Even more preferably the metal sulphide is present in an amount of from 1.0 to 2.5 percent by weight, based on the total weight of the composition.

Additional pigments, dyes and/or inert fillers may be added to the polymeric composition of the invention depending on the desired colour. The kinds and amounts of these additives are decided appropriately in accordance with the end use. In particularly preferred compositions pigments are used so that a product moulded using the composition would be pink, red, yellow, orange, lime green, lilac, mid to light blue or turquoise in colour. The pigments are preferably non-black organic pigments. The pigments are best present in an amount of from 0.01 to 10.0 percent by weight, based on the tota I weight of the composition.

Further additives may be incorporated into the co mposition to improve the moulding properties of the resin or environmental adaptability of the resulting moulded articles. Useful additives include antioxidants, antistatic agents, light stabilizers, UV absorbers, neutralizing agents, rust inhibitors, lubricants, flame retardants, nucleating agents, dispersants, processing stabilizers, flow improvers, and the like. The kinds and amounts of these additives are well-known to the skilled artisan who decides appropriately in accordance with the intended end use.

The polymeric composition of the present invention may be prepared by compounding the above-described polymeric material, metal sulphide and mica or micaceous material and, if desired, further additives. The compounding method is not limited, and any known technique can be adopted. Preferably the method is carried out either by intensive shear Z blade mixing or by extrusion (single screw or twin screw counter or co-rotating). But it is also possible just to mix or blend the components, especially if sufficient homogenization is ensured during the subsequent processing step.

The method for forming an article out of the composition is not particularly restricted. Products can be produced for example by an extrusion process, by moulding or any other similar process as known in the art. Compression moulding, injection moulding and blow moulding processes are particularly applicable. The effects of the present invention are noticeably manifested when the polymeric composition is injection moulded because the resulting injection moulded articles are excellent in surface appearance such as gloss and uniformity.

The invention is in particular directed to livestock ear tags, but is in no way limited to such articles. Excellent results are also obtained on other articles, such as automotive parts, bottles or bottle caps, tubes, pipes, containers, covers, keyboards, labels, chips, security documents such as identity or credit cards, office, household, school and military articles, toys, and many more which the skilled artisan will obviously recognize. Laser marking may be used to identify, personalize, decorate, follow up or deface such articles. The marks may, for example, contain information about the article itself, its contents, price, dimensions, purpose, date of manufacture or durability, holder, owner, manufacturer, distributer or country of origin.

The resulting article can readily be marked with letters, digits, patterns, barcodes, pointcodes, symbols, drawings etc. by scanning it with a continuous or discontinuous laser beam. Lasers used for marking are not limited and include gas lasers, such as a carbon dioxide laser, an excimer laser, and an argon laser, and solid lasers, such as a ruby laser, a semiconductor laser, and a YAG laser. One preferred laser used is a Nd:YAG laser operating at a wavelength of either 532 nm or 1064 nm. In one embodiment the product is marked by using a Nd:YAG laser at a pulse frequency of 6200 Hz; a scanning speed of 1600 mm/sec and a laser power of 26.5A.

It should be noted that because the polymeric material itself shows little absorption at the wavelength of laser irradiation, the laser marking does not significantly affect the practical performance of the moulded article.

The present invention will now be described in greater detail with reference to the following examples, but it should be understood that the present invention should not be construed as being limited thereto. Unless otherwise noted, all the references to percentage are by weight based on the total weight of the composition.

### Example 1: The following ingredients are blended together:

| | |
|---|---|
| CAS No. 13463-67-7 (C.I. Pigment White 6 = TiO₂) | 2.02% |
| CAS No. 471-34-1 (calcium carbonate) | 1.5% |
| CAS No 112945-52-5 (fumed synthetic amorphous silica) | 0.205% |
| CAS No. 154946-66-4 (C.I. Pigment Yellow 191:1) | 0.195% |
| CAS No. 5590-18-1 (C.I. Pigment Yellow 110) | 0.096% |
| Mecon^{™} MP 105 | 0.075% |
| Iriodin^{™} LS825 (surface treated mica) | 0.3% |
| CAS No. 1314-98-3 (zinc sulphide) | 1.7% |
| Elastollan^{™} WY01388 (polyurethane resin) | 92.759% |
| CAS No. 2440-22-4 (Tinuvin^{®} P, Ciba Spec. Chem. Inc.) | 0.5% |
| CAS No. 65447-77-0 (Chimassorb^{®} 622LD, Ciba Spec. Chem.) | 0.5% |
| CAS No. 6683-19-8 (Irganox^{®} 1010, Ciba Spec. Chem. Inc.) | 0.15% |

### Example 2: The following ingredients are blended together:

| | |
|---|---|
| Iriodin^{™} LS820 (surface treated mica) | 0.3% |
| MC50^{™} (melamine cyanurate) | 1.0% |
| Zinc sulphide | 1.0% |
| TU20464 Yellow (masterbatch) | 2.0% |
| CAS No. 2440-22-4 (Tinuvin^{®} P, Ciba Spec. Chem. Inc.) | 0.5% |
| CAS No. 65447-77-0 (Chimassorb^{®} 622LD, Ciba Spec. Chem.) | 0.5% |
| CAS No. 6683-19-8, (Irganox^{®} 1010, Ciba Spec. Chem. Inc.) | 0.15% |
| CAS No. 471-34-1 (calcium carbonate) | 1.5% |
| CAS No 112945-52-5 (fumed synthetic amorphous silica) | 0.075% |
| Wax mix (5% Cabosil^{™} M5, 40% calcium stearate, 55% LDPE wax) | 0.1% |
| Thermoplastic polyurethane resin | 92.875% |

### Example 3: The following ingredients are blended together:

| | |
|---|---|
| Iriodin^{™} LS825 (surface treated mica) | 0.3% |
| FT-3000^{™} (metal oxide) | 1.0% |
| Zinc sulphide | 1.0% |
| TU20464 Yellow (masterbatch) | 2.0% |
| CAS No. 2440-22-4 (Tinuvin^{®} P, Ciba Spec. Chem. Inc.) | 0.5% |
| CAS No. 65447-77-0 (Chimassorb^{®} 622LD, Ciba Spec. Chem.) | 0.5% |
| CAS No. 6683-19-8 (Irganox^{®} 1010, Ciba Spec. Chem. Inc.) | 0.15% |
| CAS No. 471-34-1 (calcium carbonate) | 1.5% |
| CAS No 112945-52-5 (fumed synthetic amorphous silica) | 0.075% |
| Wax mix (as above) | 0.1% |
| Thermoplastic polyurethane resin | 92.875% |

### Example 4: The following ingredients are blended together:

| | |
|---|---|
| Iriodin LS820 (surface treated mica) | 0.3% |
| FT-3000^{™} (metal oxide) | 1.0% |
| Zinc sulphide | 1.0% |
| TU20464 Yellow (masterbatch) | 2.0% |
| CAS No. 2440-22-4 (Tinuvin^{®} P, Ciba Spec. Chem. Inc.) | 0.5% |
| CAS No. 65447-77-0 (Chimassorb^{®} 622LD, Ciba Spec. Chem.) | 0.5% |
| CAS No. 6683-19-8 (Irganox^{®} 1010, Ciba Spec. Chem. Inc.) | 0.15% |
| CAS No. 471-34-1 (calcium carbonate) | 1.5% |
| CAS No 112945-52-5 (fumed synthetic amorphous silica) | 0.075% |
| Wax mix (as above) | 0.1% |
| Thermoplastic polyurethane resin | 92.875% |

In the abovementioned descriptions in each case where are "CAS" number is recited it is the Chemical Abstracts Service registry number (the details can be obtained on www.nicnas.gov.au/obligations/aics/search.asp.). "C.I." refers to the Colour Index International edited by the Society of Dyers and Colourists and the American Association of Textile Chemists and Colorists (www.colour-index.org).

Mecon^{™} MP 105 is a product of PolyOne Denmark and is an ethylene co-polymer alkyd compatibiliser. Iriodin^{™} LS820 and LS825 are products of Merck, Inc. and are both treated micas which have greater than 50% mica and are surface treated with metal oxides. Elastollan^{™} WY01388 is a thermoplastic polyurethane resin of BASF. FT-3000^{™} is a product of Ishihara Sangyo Kaisha Ltd and is TiO₂ and Sb₂O₅ doped with tin oxide. TU20464 Yellow is a yellow/orange thermoplastic masterbatch from Ciba Spec. Chem. Pty. Inc. containing compatibilisers and wax.

In each case these materials were compounded in a Z blade mixer at 190°C for approximately 20 seconds after flux. The respective samples were then compression moulded at 200°C for 2-3 minutes at 1379 kPa [200 psi] a nd then cooled. Subsequently, the platelets were mounted and laser marked using a Nd:YAG laser operating at a wavelength of 1064 nm.

In each of examples 1 to 4, the resulting laser marking exhibited excellent definition. A barcode marked on the products could be visibly read using a barcode scanner using a red laser. Successful markings were possible over a wide range of different colours. The invention described in this specification is applicable when using pigmented polymeric materials of various different colours. Preferably the metal sulphide used is either the same or similar to the colour of the intended product or is white such as in the case of zinc sulphide.

Utilising appropriate pigments, the applicants have utilised the compositions of the invention to produce moulded products having the following colours and associated values of lightness and chroma (C.I.E. 1976 L*C*h colour space).

| Colour | Lightness L* | Chroma C* |
|---|---|---|
| Off white | 88.89 | 2.47 |
| Yellow | 91.02 | 55.41 |
| Yellow orange | 77.27 | 65.84 |
| Red orange | 61.12 | 61.5 |
| Orange | 73.86 | 57.38 |
| Light pink | 65.42 | 45.73 |
| Pink | 65.58 | 41.39 |
| Red | 49.14 | 53.58 |
| Pale turquoise | 76.27 | 17.05 |

It will be appreciated that these values of lightness and chroma for various colours are values that might be typically expected using the compositions and processes of the invention. Best results are obtained with colours having a lightness L* of from about 40 to 100, preferably from 50 to 98, most preferred from 60 to 95. However, the invention is not at all restricted to such colours or lightness or chroma values.

In general, it will be desired that the marked areas be as dark as possible, with a lightness L* and chroma C* each from 0 to 20, preferably from 0 to 10. However, it is not necessary that this goal is always achieved. A decrease in lightness L* of at least about 5, preferably at least 10, most preferred at least 20, is easily noticeable even by people not used to evaluating colours and amply sufficient in most cases.

The laser marked moulded articles of the invention may be used for any application in which it is necessary for such indicia to be visible. By way of example it is contemplated that the polymeric compositions could be compounded to form a livestock product such as an ear tag and subsequently marked using laser processing to enable livestock handlers to track and readily identify stock.

Throughout the description and claims of this specification, use of the word "comprise" and variations of the word, such as "comprising" and "comprises", is not intended to exclude any other additives, components, integers or steps.

## Claims

1. A composition having laser marking properties comprising a polymeric material, mica or a micaceous material, a metal sulphide and one or more non-black organic pigments, preferably in an amount of from 0.01 to 10.0 percent by weight, based on the total weight of the composition.

2. A composition as claimed in claim 1, wherein there is a coating comprising a metal oxide, preferably antimony oxide, titanium oxide and/or tin oxide, on part or whole of the surface of the mica or micaceous material.

3. A composition according to claim 1 or 2, wherein the metal sulphide is selected from the group consisting of cadmium sulphide, iron sulphide, zinc sulphide and mixed sulphides comprising cadmium, iron or zinc as one of the metals, preferably wherein the metal sulphide is zinc sulphide.

4. A composition according to any one of claims 1 to 3, wherein the mica or micaceous material is present in an amount ranging from 0.05 to 2 percent by weight, preferably from 0.1 to 0.5 percent by weight, most preferred 0.3±0.1 percent by weight, based on the total weight of the composition.

5. A composition according to any one of the previous claims, wherein the polymeric material is a resin selected from the group consisting of polyolefins, polyurethanes, polycarbonates, polyesters, rubber modified monovinylidene, aromatic resins, polyetherimides, polyamides, polyimides, polyester carbonates, polyphenylene sulphides, polyamideimides, polyesteramides, polyether esters, polyetherimide esters, polyarylates, polymethylpentenes, polysulfones, polyethersulfones, polystyrenes, rubber modified high impact polystyrenes, polyoxymethylene, styrene maleic anhydride copolymers, acrylonitrile styrene acrylate copolymers, acrylonitrile butadiene styrene copolymers (ABS), polyphenylene ethers, polyether ketones, chlorinated polymers, fluorinated polymers, and liquid crystal polymers, preferably from the group consisting of polyurethanes, high impact polystyrene, polyamides, ABS, polycarbonates and rubber modified monovinylidene aromatic resins and blends thereof, most preferred is a thermoplastic polyurethane resin.

6. A composition according to claim any one of claims 1 to 5, wherein the amount of metal sulphide ranges from 0.05 to 3 percent by weight, preferably from 1.0 to 2.5 percent by weight, based on the total weight of the composition.

7. The use of a composition according to any claim 1 to 6 for the manufacture of an article.

8. An article adapted to exhibit dark markings in areas irradiated by a laser beam, which article comprises a composition of any one of claims 1 to 6 and is preferably a livestock ear tag.

9. An article according to claim 8, which is coloured in any one of the colours pink, red, yellow, orange, lime green, lilac, mid to light blue or turquoise and on which a dark marking is visible.

10. The use of an article according to claim 8 or 9 in a laser marking process, preferably in a laser marking process achieved using a Nd:YAG laser operating at a wavelength of either 532 nm or 1064 nm.

11. A method of marking an article with a laser, wherein a visible marking is formed on an article according to claim 8 or 9 by irradiating that article with a laser beam, preferably a laser beam of wavelength either 532 nm or 1064 nm from a Nd:YAG laser.

12. A method of producing an article having laser marked surface portions, which method comprises
(a) providing a polymeric material;
(b) compounding said polymeric material with mica or a micaceous material, a metal sulphide and one or more non-black organic pigments to provide a polymeric composition;
(c) forming an article using the polymeric composition; and
(d) irradiating said article with a laser beam to produce laser marked surface portions on the article.

13. A method according to claim 12, wherein there is a coating comprising a metal oxide, preferably antimony oxide, titanium oxide and/or tin oxide, on part or whole of the surface of the mica or micaceous material.

14. A method according to claim 12 or 13, wherein the metal sulphide is selected from the group consisting of cadmium sulphide, iron sulphide, zinc sulphide and mixed sulphides comprising cadmium, iron or zinc as one of the metals, preferably wherein the metal sulphide is zinc sulphide.

15. A method according to any one of claims 12 to 14, wherein the mica or micaceous material is present in an amount ranging from 0.05 to 2 percent by weight, preferably from 0.1 to 0.5 percent by weight, most preferred 0.3±0.1 percent by weight, based on the total weight of the article.

16. A method according to any one of claims 12 to 15, wherein the polymeric material is a resin selected from the group consisting of polyolefins, polyurethanes, polycarbonates, polyesters, rubber modified monovinylidene, aromatic resins, polyetherimides, polyamides, polyimides, polyester carbonates, polyphenylene sulphides, polyamideimides, polyesteramides, polyether esters, polyetherimide esters, polyarylates, polymethylpentenes, polysulfones, polyethersulfones, polystyrenes, rubber modified high impact polystyrenes, polyoxymethylene, styrene maleic anhydride copolymers, acrylonitrile styrene acrylate copolymers, acrylonitrile butadiene styrene copolymers (ABS), polyphenylene ethers, polyether ketones, chlorinated polymers, fluorinated polymers, and liquid crystal polymers, preferably from the group consisting of polyurethanes, polycarbonates, polyamides, high impact polystyrene, ABS and rubber modified monovinylidene aromatic resins and blends thereof, most preferred is a thermoplastic polyurethane resin.

17. A method according to any one of claims 12 to 16, wherein the article is irradiated with a laser beam at a radiation level of 5-50A at a frequency of 1 - 100kHz in the range of 500-2100nm.

18. A method according to any one of claims 12 to 17, wherein the amount of metal sulphide ranges from 0.05 to 3 percent by weight, preferably from 1.0 to 2.5 percent by weight, based on the total weight of the composition.

19. A method according to any one of claims 12 to 18, wherein the amount of non-black pigments is from 0.01 to 10.0 percent by weight, based on the total weight of the composition.

20. A method according to any one of claims 18 to 27, wherein the article formed in said step (c) is a livestock ear tag and is preferably coloured pink, red, yellow, orange, lime green, lilac, mid to light blue or turquoise.

## Patentansprüche

1. Zusammensetzung mit lasermarkierenden Eigenschaften, umfassend ein Polymermaterial, Glimmer oder ein glimmerartiges Material, ein Metallsulfid und ein oder mehrere nichtschwarze organische Pigmente, vorzugsweise in einer Menge von 0,01 bis 10,0 Gewichtsprozent, bezogen auf das Gesamtgewicht der Zusammensetzung.

2. Zusammensetzung nach Anspruch 1, worin es eine Beschichtung gibt, die ein Metalloxid, vorzugsweise Antimonoxid, Titanoxid und/oder Zinnoxid, auf einem Teil oder der Gesamtheit der Oberfläche von dem Glimmer oder glimmerartigen Material umfasst.

3. Zusammensetzung nach Anspruch 1 oder 2, worin das Metallsulfid aus der Gruppe, bestehend aus Cadmiumsulfid, Eisensulfid, Zinksulfid und gemischten Sulfiden, die Cadmium, Eisen oder Zink als eines der Metalle umfassen, ausgewählt ist, vorzugsweise worin das Metallsulfid Zinksulfid ist.

4. Zusammensetzung nach einem der Ansprüche 1 bis 3, worin der Glimmer oder das glimmerartige Material in einer Menge im Bereich von 0,05 bis 2 Gewichtsprozent, vorzugsweise 0,1 bis 0,5 Gewichtsprozent, besonders bevorzugt 0,3 ± 0,1 Gewichtsprozent, bezogen auf das Gesamtgewicht der Zusammensetzung, vorliegt.

5. Zusammensetzung nach einem der vorangehenden Ansprüche, worin das Polymermaterial ein Harz, ausgewählt aus der Gruppe, bestehend aus Polyolefinen, Polyurethanen, Polycarbonaten, Polyestern, Kautschuk-modifizierten Monovinyliden-aromatischen Harzen, Polyetherimiden, Polyamiden, Polyimiden, Polyestercarbonaten, Polyphenylensulfiden, Polyamidimiden, Polyesteramiden, Polyetherestern, Polyetherimidestern, Polyarylaten, Polymethylpentenen, Polysulfonen, Polyethersulfonen, Polystyrolen, Kautschuk-modifizierten Polystyrolen mit hoher Schlagfestigkeit, Polyoxymethylenen, Styrol-Maleinsäure-Anhydrid-Copolymeren, Acrylnitril-Styrol-Acrylat-Copolymeren, Acrylnitril-Butadien-Styrol-Copolymeren (ABS), Polyphenylenethern, Polyetherketonen, chlorierten Polymeren, fluorierten Polymeren und Flüssigkristallpolymeren, vorzugsweise aus der Gruppe, bestehend aus Polyurethanen, Polystyrol mit hoher Schlagfestigkeit, Polyamiden, ABS, Polycarbonaten und Kautschuk-modifizierten Monovinyliden-aromatischen Harzen und Blends davon, darstellt, besonders bevorzugt ist ein thermoplastisches Polyurethanharz.

6. Zusammensetzung nach einem der Ansprüche 1 bis 5, worin die Menge an Metallsulfid im Bereich von 0,05 bis 3 Gewichtsprozent, vorzugsweise 1,0 bis 2,5 Gewichtsprozent, bezogen auf das Gesamtgewicht der Zusammensetzung, vorliegt.

7. Verwendung einer Zusammensetzung nach einem von Anspruch 1 bis 6 zur Herstellung eines Gegenstands.

8. Gegenstand, angepasst, um dunkle Markierungen auf Bereichen, die mit einem Laserstrahl bestrahlt wurden, zu zeigen, wobei der Gegenstand eine Zusammensetzung nach einem der Ansprüche 1 bis 6 umfasst und vorzugsweise eine Ohrmarkierung für Viehbestand ist.

9. Gegenstand nach Anspruch 8, der in einer von den Farben Rosa, Rot, Gelb, Orange, Lindgrün, Lila, Mittel- bis Hellblau oder Türkis gefärbt ist und auf dem eine dunkle Markierung sichtbar ist.

10. Verwendung eines Gegenstands nach Anspruch 8 oder 9 in einem Lasermarkierungsverfahren, vorzugsweise in einem Lasermarkierungsverfahren, das mit einem Nd:YAG-Laser erreicht wird, der bei einer Wellenlänge von entweder 532 nm oder 1064 nm arbeitet.

11. Verfahren zum Markieren eines Gegenstands mit einem Laser, wobei eine sichtbare Markierung auf einen Gegenstand nach Anspruch 8 oder 9 durch Bestrahlen des Gegenstands mit einem Laserstrahl, vorzugsweise einem Laserstrahl der Wellenlänge von entweder 532 nm oder 1064 nm aus einem Nd:YAG-Laser, gebildet wird.

12. Verfahren zur Herstellung eines Gegenstands mit lasermarkierten Oberflächenteilen, wobei das Verfahren umfasst:
(a) Bereitstellen eines Polymermaterials;
(b) Compoundieren des Polymermaterials mit Glimmer oder einem glimmerartigen Material, einem Metallsulfid und einem oder mehreren nichtschwarzen organischen Pigmenten, um eine Polymerzusammensetzung bereitzustellen;
(c) Bilden eines Gegenstands unter Verwendung der Polymerzusammensetzung; und
(d) Bestrahlen des Gegenstands mit einem Laserstrahl, um lasermarkierte Oberflächenteile auf dem Gegenstand zu erzeugen.

13. Verfahren nach Anspruch 12, wobei es eine Beschichtung gibt, die ein Metalloxid, vorzugsweise Antimonoxid, Titanoxid und/oder Zinnoxid, auf einem Teil oder der Gesamtheit der Oberfläche von dem Glimmer oder glimmerartigen Material umfasst.

14. Verfahren nach Anspruch 12 oder 13, wobei das Metallsulfid aus der Gruppe, bestehend aus Cadmiumsulfid, Eisensulfid, Zinksulfid und gemischten Sulfiden, die Cadmium, Eisen oder Zink als eines der Metalle umfassen, ausgewählt ist, vorzugsweise worin das Metallsulfid Zinksulfid ist.

15. Verfahren nach einem der Ansprüche 12 bis 14, wobei der Glimmer oder das glimmerartige Material in einer Menge im Bereich von 0,05 bis 2 Gewichtsprozent, vorzugsweise 0,1 bis 0,5 Gewichtsprozent, besonders bevorzugt 0,3 ± 0,1 Gewichtsprozent, bezogen auf das Gesamtgewicht des Gegenstands, vorliegt.

16. Verfahren nach einem der Ansprüche 12 bis 15, wobei das Polymermaterial ein Harz, ausgewählt aus der Gruppe, bestehend aus Polyolefinen, Polyurethanen, Polycarbonaten, Polyestern, Kautschuk-modifizierten Monovinyliden-aromatischen Harzen, Polyetherimiden, Polyamiden, Polyimiden, Polyestercarbonaten, Polyphenylensulfiden, Polyamidimiden, Polyesteramiden, Polyetherestern, Polyetherimidestern, Polyarylaten, Polymethylpentenen, Polysulfonen, Polyethersulfonen, Polystyrolen, Kautschuk-modifizierten Polystyrolen mit hoher Schlagfestigkeit, Polyoxymethylenen, Styrol-Maleinsäure-Anhydrid-Copolymeren, Acrylnitril-Styrol-Acrylat-Copolymeren, Acrylnitril-Butadien-Styrol-Copolymeren (ABS), Polyphenylenethern, Polyetherketonen, chlorierten Polymeren, fluorierten Polymeren und Flüssigkristallpolymeren, vorzugsweise aus der Gruppe, bestehend aus Polyurethanen, Polycarbonaten, Polyamiden, Polystyrol mit hoher Schlagfestigkeit, ABS und Kautschuk-modifizierten Monovinyliden-aromatischen Harzen und Blends davon, darstellt, besonders bevorzugt ist ein thermoplastisches Polyurethanharz.

17. Verfahren nach einem der Ansprüche 12 bis 16, wobei der Gegenstand mit einem Laserstrahl bei einem Strahlungsgrad von 5-50 A bei einer Frequenz von 1-100 kHz im Bereich von 500-2100 nm bestrahlt wird.

18. Verfahren nach einem der Ansprüche 12 bis 17, wobei die Menge an Metallsulfid im Bereich von 0,05 bis 3 Gewichtsprozent, vorzugsweise 1,0 bis 2,5 Gewichtsprozent, bezogen auf das Gesamtgewicht der Zusammensetzung, liegt.

19. Verfahren nach einem der Ansprüche 12 bis 18, wobei die Menge an nichtschwarzen Pigmenten von 0,01 bis 10,0 Gewichtsprozent, bezogen auf das Gesamtgewicht der Zusammensetzung, ist.

20. Verfahren nach einem der Ansprüche 18 bis 27, wobei der in dem Schritt (c) gebildete Gegenstand eine Ohrmarkierung für einen Viehbestand ist und vorzugsweise rosa, rot, gelb, orange, lindgrün, lila, mittel- bis hellblau oder türkis gefärbt ist.

## Revendications

1. Composition douée de propriétés de marquage au laser comprenant une matière polymère, le mica ou une matière micacée, un sulfure métallique et un ou plusieurs pigments organiques non noirs, de préférence en une quantité de 0,01 à 10,0 % en masse, par rapport à la masse totale de la composition.

2. Composition selon la revendication 1, dans laquelle est compris un revêtement comprenant un oxyde métallique, de préférence l'oxyde d'antimoine, l'oxyde de titane et/ou l'oxyde d'étain, sur une partie ou la totalité de la surface du mica ou de la matière micacée.

3. Composition selon la revendication 1 ou 2, dans laquelle le sulfure métallique est pris dans le groupe constitué par le sulfure de cadmium, le sulfure de fer, le sulfure de zinc et les sulfures mixtes comprenant le cadmium, le fer ou le zinc en tant qu'un des métaux, de préférence dans laquelle le sulfure métallique est le sulfure de zinc.

4. Composition selon l'une quelconque des revendications 1 à 3, dans laquelle le mica ou la matière micacée est présente en une quantité allant de 0,05 à 2 % en masse, de préférence de 0,1 à 0,5 % en masse, de manière la plus préférée de 0,3 ± 0,1 % en masse, par rapport à la masse totale de la composition.

5. Composition selon l'une quelconque des revendications précédentes, dans laquelle la matière polymère est une résine prise dans le groupe constitué par des polyoléfines, polyuréthannes, polycarbonates, polyesters, monovinylidène modifié par du caoutchouc, résines aromatiques, polyétherimides, polyamides, polyimides, carbonates de polyesters, sulfures de polyphénylène, polyamide-imides, polyesteramides, esters de polyéther, esters de polyétherimide, polyarylates, polyméthylpentènes, polysulfones, polyéthersulfones, polystyrènes, polystyrènes à haute résistance au choc modifiés par du caoutchouc, polyoxyméthylène, copolymères de styrène/anhydride maléique, copolymères d'acrylonitrile/styrène/acrylate, copolymères d'acrylonitrile/butadiène/styrène (ABS), éthers de polyphénylène, polyéthercétones, polymères chlorés, polymères fluorés et polymères à cristal liquide, de préférence du groupe constitué par des polyuréthannes, polystyrène à haute résistance au choc, polyamides, ABS, polycarbonates et résines aromatiques de monovinylidène modifiées par du caoutchouc et leurs mélanges, de manière la plus préférée, une résine de polyuréthanne thermoplastique.

6. Composition selon l'une quelconque des revendications 1 à 5, dans laquelle la quantité de sulfure métallique se situe dans le domaine de 0,05 à 3 % en masse, de préférence de 1,0 à 2,5 % en masse, par rapport à la masse totale de la composition.

7. Utilisation d'une composition selon l'une quelconque des revendications 1 à 6 pour la fabrication d'un article.

8. Article adapté en vue de présenter des marquages foncés dans les régions irradiées par un faisceau laser, ledit article comprenant une composition selon l'une quelconque des revendications 1 à 6 et qui est de préférence une étiquette d'oreille de bétail.

9. Article selon la revendication 8, qui est coloré d'une quelconque des couleurs rose, rouge, jaune, orange, vert jaune, lilas, de bleu moyen à bleu foncé ou turquoise et sur laquelle est visible un marquage sombre.

10. Utilisation d'un article selon la revendication 8 ou 9 dans un procédé de marquage au laser, de préférence dans un procédé de marquage au laser réalisé à l'aide d'un laser Nd:YAG qui opère à une longueur d'onde soit de 532 nm soit de 1064 nm.

11. Méthode de marquage d'un article au moyen d'un laser, dans laquelle est formé un marquage visible sur un article selon la revendication 8 ou 9 par irradiation de cet article par un faisceau laser, de préférence un faisceau laser d'une longueur d'onde soit de 532 nm soit de 1064 nm d'un laser Nd:YAG.

12. Méthode de production d'un article ayant des portions de surface marquées au laser, ladite méthode comprenant
(a) la fourniture d'une matière polymère;
(b) le compoundage de ladite matière polymère avec du mica ou une matière micacée, un sulfure métallique et un ou plusieurs pigments organiques non noirs afin d'obtenir une composition polymère;
(c) la formation d'un article en utilisant la composition polymère ; et
(d) l'irradiation dudit article par un faisceau laser afin de produire des portions de la surface marquées au laser sur l'article.

13. Méthode selon la revendication 12, dans laquelle est compris un revêtement comprenant un oxyde métallique, de préférence l'oxyde d'antimoine, l'oxyde de titane et/ou l'oxyde d'étain, sur une partie ou la totalité de la surface du mica ou d'une matière micacée.

14. Méthode selon la revendication 12 ou 13, dans laquelle le sulfure métallique est pris dans le groupe constitué par le sulfure de cadmium, le sulfure de fer, le sulfure de zinc et les sulfures mixtes comprenant le cadmium, le fer ou le zinc en tant qu'un des métaux, de préférence sans laquelle le sulfure métallique est le sulfure de zinc.

15. Méthode selon l'une quelconque des revendications 12 à 14, dans laquelle le mica ou la matière micacée est présente en une quantité allant de 0,05 à 2 % en masse, de préférence de 0,1 à 0,5 % en masse, de manière la plus préférée de 0,3 ± 0,1 % en masse, par rapport à la masse totale de l'article.

16. Méthode selon l'une quelconque des revendications 12 à 15, dans laquelle la matière polymère est une résine choisie dans le groupe constitué par des polyoléfines, polyuréthannes, polycarbonates, polyesters, monovinylidène modifié par du caoutchouc, résines aromatiques, polyétherimides, polyamides, polyimides, carbonates de polyester, sulfures de polyphénylène, polyamide-imides, polyesteramides, esters de polyéther, esters de polyétherimide, polyarylates, polyméthylpentènes, polysulfones, polyéthersulfones, polystyrènes, polystyrènes à haute résistance au choc modifiés par du caoutchouc, polyoxyméthylène, copolymères de styrène/anhydride maléique, copolymères d'acrylonitrile/styrène/acrylate, copolymères d'acrylonitrile/butadiène/styrène (ABS), éthers de polyphénylène, polyéthercétones, polymères chlorés, polymères fluorés et polymères à cristal liquide, de préférence du groupe constitué par des polyuréthannes, polycarbonates, polyamides, polystyrène à haute résistance au choc, ABS et résines aromatiques de monovinylidène modifiées par du caoutchouc et leurs mélanges, de manière la plus préférée, une résine de polyuréthanne thermoplastique.

17. Méthode selon l'une quelconque des revendications 12 à 16, dans laquelle l'article est irradié par un faisceau laser avec un niveau de radiations de 5 à 50A à une fréquence de 1 à 100kHz dans le domaine de 500 à 2100 nm.

18. Méthode selon l'une quelconque des revendications 12 à 17, dans laquelle la quantité de sulfure métallique se situe dans le domaine de 0,05 à 3 % en masse, de préférence de 1,0 à 2,5 % en masse, par rapport à la masse totale de la composition.

19. Méthode selon l'une quelconque des revendications 12 à 18, dans laquelle la quantité des pigments non noirs va de 0,01 à 10,0 % en masse, par rapport à la masse totale de la composition.

20. Méthode selon l'une quelconque des revendications 18 à 27, dans laquelle l'article formé dans ladite étape (c) est une étiquette d'oreille de bétail et de préférence colorée de rose, de rouge, de jaune, d'orange, de vert jaune, de lilas, de bleu moyen à bleu clair ou turquoise.
